# EUROPEAN PATENT SPECIFICATION

(11) **EP 0 615 691 B1**
(45) Date of publication and mention of the grant of the patent: **01.10.1997**
(21) Application number: 94200664.4
(22) Date of filing: 15.03.1994
(51) Int. Cl.: A23C 19/16

(54) **Method of manufacturing a cheese skin for moisture regulation and protection against microbial influences**
Verfahren zur Herstellung von Käsehaut zur Regulation der Feuchte und zum Schutz gegen mikrobielle Einflüsse
Préparation d'une peau de formage pour la régulation de l'humidité et la protection contre des influences microbiennes

(30) Priority: 16.03.1993 NL 9300470
(43) Date of publication of application: 21.09.1994
(73) Proprietor: Friesland Brands B.V., 8937 AC Leeuwarden (NL); PRIMUS BEHEER B.V., 1505 GB Zaandam (NL)
(72) Inventor: van de Akker, Theodorus Adrianus Maria, NL-1056 BG Zaandam (NL); Hup, Gerard, NL-8921 TX Leeuwarden (NL)
(74) Representative: Smulders, Theodorus A.H.J., Ir.

(56) References cited:
- EP-A- 0 048 123
- WO-A-86/06588
- DE-C- 626 383
- DE-C- 858 631
- US-A- 2 856 294
- ZUIVELBEREIDING EN HANDEL vol. 56, no. 45 , 7 November 1950 page 941 AN. 'Een middel tegen het beschimmelen van kaas'

## Description

The invention relates to a cheese skin for moisture regulation and protection against microbial influences, and to a method of providing a cheese skin on cheese.

It is generally known (see, for instance, Dr. Heinrich Mair-Waldburg, Handbuch der Käse, (1974), Volkswirtschaftlicher Verlag GmbH, Kempten (Allgäu), Germany, in particular pages 220-221 and 254-255) that after brining, cheese, and in particular hard cheese, for instance Emmental, and cutting cheese, for instance Edam, is packed to control maturation. This packing is carried out in order to prevent losses of weight due to an excess degree of evaporation, and to protect the cheese surface against microbial influences, such as fungoid growth. Also, in the case of packed cheeses, a less thick rind is formed, resulting in less cheese waste. In this manner, the provision of a packing material round maturing cheese reduces the cost of the care of cheese.

As packing material, many different materials are used, such as shrink film, for instance laquered aluminum foil or aluminum foil provided with a wax coat on the inside thereof, cellophane and films of various synthetic substances, such as polyvinylidene chloride, polyethylene and polyamide. Depending on the nature of the cheese, these materials can be chosen from for controlling maturation, in which connection the permeability to water vapor, oxygen and carbon dioxide play a particular part.

The conventional cheese packing materials have a number of drawbacks. The materials mentioned should be removed for consumption. For this reason these materials are referred to as packing materials. Further, it is usually necessary to add a microbicide agent in order to prevent fungoid growth or spoilage through bacteria. Moreover, when these known packing materials are used, it is complicated to regulate the loss of moisture during maturation. For this purpose, it is necessary either to modify the packing material by including admixtures in the film which modify the permeability, or to apply layers having different properties.

These drawbacks are substantially overcome by covering cheeses with a layer consisting of calcium alginate or another metal alginate forming a water-insoluble layer. Such cheeses provided with a separate insoluble alginate layer are disclosed in German patent specification 858 631. The insoluble layer can be provided on the cheeses by providing on the cheese a water-soluble alginate and subsequently treating the cheese with a salt whose anion forms, together with alginate a water-insoluble compound.

In "Zuivelbereiding en Handel" 56 (1950) 941, a short summary of an article in Meieriposten in given. In this summary a process is described for providing a cheese skin on cheese comprising as essential steps: the brushing of a solution of sodium alginate onto a green cheese; and spraying a solution of calcium chloride onto the alginate layer. It is explicitly stated that the cheese skin is only formed after the treatment with calcium chloride.

DE-C-626 383 describes a process for providing a cheese skin onto cheese by treating cheese with a pectin solution.

The object of the present invention is to provide alginate-coated cheeses which, in addition to overcoming the above-mentioned drawbacks known from the prior art, also have a number of advantages over the alginate layers disclosed in the above-mentioned German patent specification. The object is in particular to provide a cheese wherein the alginate layer is anchored in the cheese.

According to the invention, the cheese having achored thereto a cheese skin for moisture regulation and protection against microbial influences can be obtained by treating the cheese, after brining, with an aqueous solution of alginate, which aqueous solution is an oil-in-water emulsion containing 5-15 % fat relative to the amount of alginate solution, directly followed by drying this alginate solution such that the alginate solution forms, together with calcium ions from the cheese, a cheese skin anchored to the cheese.

Further, the invention relates to a method of providing a cheese skin on cheese, wherein the cheese, after brining, is treated with an aqueous solution of a water-soluble alginate, which aqueous solution is an oil-in-water emulsion containing 5-15 % fat relative to the amount of alginate solution, which step is followed by a drying step.

According to the invention, by the term "alginate" is meant a hydrocolloid or a macromolecular polysaccharide substantially composed of molecules of mannuronic acid and/or glucuronic acid, more in particular of D-mannuronic acid and/or L-glucuronic acid, also referred to as L-guluronic acid. In food industry, alginates are mainly used as stabilizers, gelling and thickening agents. In many cases, these hydrocolloids are attractive because of the strong viscosity-increasing and gel-forming capacity, in addition to a relatively low cost price.

The most conventional raw material for alginate is brown seaweed, more in particular brown seaweed of the types *Macrocystis*, *Laminaria* and *Ascophyllum*. In these weeds, alginates are present as alginic acid and the sodium, potassium, calcium and magnesium salts thereof. The alginate is extracted from this raw material by boiling out the weed with a lye solution to extract alginic acid. Subsequently, this acid can be precipitated as an insoluble calcium salt, further purified and reconverted into the acid. From alginic acid the alginate salts may be prepared, if desired. Sodium alginate is used most in the food industry. For a more detailed survey of the isolation of alginates from brown seaweed, reference can for instance be made to Kirk-Othmer, Encyclopedia of Chemical Technology, third Edition, Volume 12, (1980) John Wiley & Sons, New York, page 52, and the article "Alginaten breed toepasbaar in levensmiddelenindustrie" from Food Management, December 1989, pages 42 and 43.

More particularly, for providing the cheese skin according to the invention, an oil-in-water emulsion of sodium alginate is used, which emulsion contains 5-15 wt.% oil or fat.

It is further noted that international patent application 86/06588 describes a cheese which is immature or not completely mature, comprising a substantially semipermeable outer envelope. This outer envelope comprises a gelatinous food product formed, for instance, from an aqueous alginate solution. This gel remains in a moist, swollen condition. This appears, among other things, from the fact that this publication nowhere mentions a drying step. The purpose of this gel is to provide an enclosing layer that should be permeable to water, gases and enzymes. As mentioned above, the cheese skin according to the invention is manufactured by providing on a cheese a water-soluble alginate in an aqueous solution and subsequently allowing this layer to dry. During this drying step, calcium ions diffuse from the cheese to the alginate layer and cross-link this layer to produce a layer which is dry, i.e. not swollen, and far less permeable.

The cheese skin according to the invention has a large number of advantages. In the first place, this cheese skin is edible. This has as an advantage that for consumption the skin need not be peeled from the cheese. On the other hand, if the skin is indeed removed, the peeled-off layer is completely biodegradable. As indicated above, these advantages are not obtained in the case of conventional cheese packing means, which are not formed from alginate. In addition, an anchoring of alginate to the cheese more or less occurs. The alginate adheres to the cheese like a skin. This means that the alginate layer becomes part of the cheese itself. For this reason, in terms of the law on food products, this layer need not be referred to as packing material.

The cheese skin, formed from alginate, can simply be applied in liquid form. After the alginate solution has dried in, a relatively open network structure is formed. By applying different layers of alginate from a solution, a skin can be obtained which, depending on the maturing stage and the environmental conditions in the maturing space, can be adjusted such that in particular the desired amount of loss of moisture can be regulated. The cheese skin according to the invention enables modification of the rind formation as is desired.

By applying sufficient layers of alginate, a cheese skin can be obtained which meets all requirements that a cheese coating should meet. However, after the maturing step, it is also possible to preserve the cheese in a conventional manner from, in particular, drying out. More in particular, the cheese skin according to the invention is excellently compatible with cheese wax coatings that are conventionally used.

Moreover, the cheese skin according to the invention has proved to protect the cheese against fungoid and bacterial growth. It is no longer necessary to use conventional microbicide agents, such as natamycine.

Due to the pseudoplastic character of alginate, the cheese skin according to the invention is impact-resistant. The skin is not likely to break.

As mentioned above, the invention also relates to a method of providing a cheese skin on cheese. According to the invention, this method is characterized in that after brining, invention, this method is characterized in that after brining, cheese is treated with the above defined oil-in-water emulsion of alginate, which emulsion is subsequently dried in.

In a preferred embodiment of this method, the cheese is treated with an aqueous emulsion of sodium alginate.

During the preparation of cheeses of the hard or cuttable type, the starting curd mass is pressed into a particular shape and subsequently brined. After this brining in a conventional brining bath, a solution of alginate can be provided on the cheese. This may take place manually, for instance by means of a sponge, or mechanically. Mechanical application means for applying a substance or composition in liquid condition are sufficiently well known to a person skilled in the art.

The fact that the alginate layer can be applied in liquid form ensures a quick processing.

The alginate in liquid or dissolved form forms a three-dimensional structure in the presence of polyvalent cations. More particularly, calcium ions play an essential part in this process. As is known, in cheese, calcium ions are present in large amounts. They substantially contribute to the cheese consistence and the formation of the natural cheese rind. These calcium ions effect that the alginate chains do not only cross-link with each other, but also with the component parts of cheese. In this manner, an anchoring of alginate to the cheese is more or less formed. The alginate adheres to the cheese like a skin. As is already mentioned before, this means that the alginate layer becomes part of the cheese itself. In terms of the law on food products, this layer need not be referred to as packing material.

To facilitate the processability of the alginate solution, the cheese is preferably treated with a solution of sodium alginate having a viscosity of 3-15 Pa.s (30-150 poises), measured at room temperature.

The formation of a three-dimenional structure from alginate chains depends on the pH. For instance, it is known that sodium alginate as a thickening or gelling agent is most effective at a pH varying between 4 and 7. Moreover, it is known from the article from Food Management already mentioned above that the influence of the pH on the viscosity of alginates depends on, among other things, the calcium concentration. Alginate solutions in an environment having a high content of calcium ions will only start forming a gel at a pH of 5 or higher. The calcium content varies per type of cheese. Logically, this means that, depending on the cheese to be treated, the alginate solution will have a specific preferred pH range. Generally, the method according to the invention is carried out at a pH varying between 3.5 and 7.5, preferably, however, between 4.3 and 5.6. Optionally, pH-regulating means, such as buffers, may be added to the alginate solution.

As is already shown hereinabove, by nature, cheese forms a rind under the influence of the calcium present. Especially during the first formation, this rind effects too great an interaction with the environment. This leads on the one hand to drying in, on the other to exposure to microorganisms, in particular fungi and Coryne bacteria. By means of the method according to the invention, the maturation of the cheese and the formation of a rind can be regulated in a simple manner. Depending on the maturing stage and on the conditions in the maturing space, more layers of alginate can be provided on the cheese. The second and subsequent alginate layers cross-link to the cheese and/or the previously provided alginate layers, as these previously provided layers are to some degree permeable to calcium ions.

The invention further relates to a method wherein auxiliary substances, such as pH regulators, coloring agents and coating-supporting substances, are added to the cheese treated with an alginate solution. Preferably, coating-supporting auxiliary substances are added to the cheese skin.

Preferably, like the cheese skin, the auxiliary substances that can be added to the cheese skin are fit for human consumption. For instance, carbohydrates, such as rice starch and carboxymethylcellulose, and proteins, such as caseinate, are added to the cheese skin as a filler. Such coating-supporting fillers give the cheese skin more firmness, so that the shape of the cheese is better preserved. Further, the regulation of the loss of moisture can be optimized and the thickness of the skin can be increased, which increases the mechanical protection. Coloring agents are added to further improve the cosmetic outward appearance of the cheese with the cheese skin.

In a conventional cheese store house, a rather moist environment prevails (relative degree of humidity of 80-90%). If the cheeses treated with the alginate solution are allowed to dry in a drier environment (relative degree of humidity of, for instance, 65-75%), two significant problems occur. In the first place, the cheese dries out quickly, while, in addition, a dry alginate layer is quickly formed which breaks relatively easily. These problems can be overcome by starting from an oil-in-water emulsion containing 5-15% fat relative to the amount of alginate solution, rather than from an aqueous solution of the water-soluble alginate. In essence, any oil or fat suitable for use in food products can be used, such as coconut oil, arachide oil and Trisun® (sunflower oil). For this invention, such emulsions, largely consisting of water, are considered to be included in the term "aqueous solution".

As mentioned above, after the maturing process, the cheese with the biological and edible cheese skin, having in principle all properties of a good cheese coating, can still be coated with a conventional cheese wax coating. Such a cheese wax coating is excellently compatible with the alginate cheese skin.

The invention will be further explained on the basis of the following examples.

### Reference Example 1

In a Hobart® mixer with a suitable beater, 22 l cold water was measured out. To this, 1260 g of a commercially available sodium alginate composition, Satialgine®, was slowly added. This mixture was mixed for approximately 1.5 h to form a homogeneous mass, the rotational speed being slowly increased from 50 to 800 cycles per minute. The smooth, viscous mass obtained was transferred into a plastic bucket, closed with a lid, and stored until the moment of providing it on the cheeses.

### Reference Example 2

By means of a sponge, the viscous mass as prepared in Reference Example 1 was manually provided in a reasonably thick layer of approximately 2 mm on a series of brine-dry cheeses, on one side thereof. The cheeses were air-dried in a conventional manner in a cheese storehouse. After drying, the other side of the cheese was treated in a similar manner after two days. In this manner, several layers were applied, while a normal turning program of the cheeses was followed. In course of time, the matured cheeses had a nicely smooth and shining outward appearance. The drying-in process proved to be similar to that of cheeses coated with conventional cheese plastic.

### Reference Example 3

By means of citric acid, in the Hobart® mixer, the acid content of an amount of smooth-viscous mass prepared according to Example 1 was adjusted at a value of pH 4.5. This mass, too, was stored in a closed plastic bucket and provided on a series of cheeses analogously to Reference Example 2. The matured cheeses had a nice outward appearance without any perceptible fungoid growth.

### Reference Example 4

Example 1 was repeated, with the addition of 50 g rice starch (Remy B®) to 22 l cold water. Further, 0.01 % of an annatto coloring suspension (E-160B), generally commercially available, was added to this prepared amount of alginate mass. The cheeses treated with the thus obtained product had an attractive yellow appearance.

### Reference Example 5

To the amount of alginate mass prepared according to Reference Example 3, an amount of 0.5 % of a commercially available composition ascorbic acid (E-300) was added. After sufficient mixing to obtain a smooth-viscous mass, a pH value of 4.3 was measured. The drying-in process and the outward appearance of the cheeses treated with the thus prepared product were comparable with those of cheeses that were treated in a traditional manner. The cheese skin provided the cheese with adequate protection against influences from outside and had as an advantage that it did not have to be removed for consumption.

### Example 1

In a Hobart® mixer with a suitable beater, an amount of 22 l cold water was measured out. Moreover, in a mixing bowl, 2520 g arachide oil (Romi®) and 30 g lecithin (E322) were added. Subsequently, with stirring, 1260 g of the sodium alginate composition Satialgine® was slowly dosed herein.
This mixture was mixed for 1-1.5 hours to form a homogeneous mass, the rotational speed being gradually increased. To the thus prepared mass, 0.01 % by weight of an annatto coloring suspension, generally commerially available, was added.
The smooth, viscous mass was transferred into a plastic bucket, closed with a lid, and stored until the moment of providing it on the cheeses, in the manner as described in Reference Example 2.
The cheeses treated with the thus obtained product had an attractive yellow appearance.

## Claims

1. A cheese having anchored thereto a cheese skin for the moisture regulation and protection against microbial influences, obtainable by treating the cheese, after brining, with an aqueous solution of a water-soluble alginate, directly followed by drying said alginate solution such that the alginate solution forms, together with calcium ions from the cheese, a cheese skin anchored to the cheese wherein an oil-in-water emulsion containing 5-15 % fat relative to the amount of alginate solution is used as aqueous solution.

2. A cheese according to claim 1, wherein the aqueous solution is a solution of sodium alginate.

3. A method of providing a cheese skin on cheese, wherein the cheese, after brining, is treated with an aqueous solution of a water-soluble alginate, which aqueous alginate solution is an oil-in-water emulsion containing 5-15% fat relative to the amount of alginate solution, said treatment being followed by a drying step.

4. A method according to claim 3, wherein the cheese is treated with a solution of sodium alginate.

5. A method according to claim 3 or 4, wherein the cheese is treated with a solution of sodium alginate having a viscosity of 3-15 Pa.s (30-150 poises), measured at room temperature.

6. A method according to any one of claims 3-5, wherein the treatment of the cheese is carried out at a pH varying between 3.5 and 7.5, preferably between 4.3 and 5.6.

7. A method according to any one of claims 3-6, wherein the steps of providing the alginate solution and of drying are repeated a number of times.

8. A method according to any one of claims 3-7, wherein the cheese is treated with an alginate solution to which auxiliary substances, such as pH regulators, coloring agents and coating-supporting substances are added.

9. A method according to any one of claims 3-8, wherein after the maturing process, the cheese with the cheese skin is coated with a conventional cheese wax coating.

## Patentansprüche

1. Käse mit einer darauf verankerten Käsehaut zur Regulation der Feuchte und zum Schutz gegen mikrobielle Einflüsse, der erhältlich ist, indem der Käse nach Behandlung mit Salzlauge mit einer wäßrigen Lösung eines wasserlöslichen Alginats behandelt wird und direkt anschließend die Alginatlösung so getrocknet wird, daß die Alginatlösung zusammen mit den Calciumionen aus dem Käse eine auf dem Käse verankerte Käsehaut bildet, wobei eine Öl-in-Wasser-Emulsion, die 5 bis 15% Fett bezogen auf die Menge der Alginatlösung enthält, als wäßrige Lösung verwendet wird.

2. Käse nach Anspruch 1, wobei die wäßrige Lösung eine Lösung von Natriumalginat ist.

3. Verfahren zur Erzeugung einer Käsehaut auf Käse, bei dem Käse nach Behandlung mit Salzlauge mit einer wäßrigen Lösung eines wasserlöslichen Alginats behandelt wird, die eine Öl-in-Wasser-Emulsion, die 5 bis 15% Fett bezogen auf die Menge der Alginatlösung enthält, ist, und sich an diese Behandlung eine Trocknungsstufe anschließt.

4. Verfahren nach Anspruch 3, bei dem der Käse mit einer Lösung von Natriumalginat behandelt wird.

5. Verfahren nach Anspruch 3 oder 4, bei dem der Käse mit einer Lösung von Natriumalginat behandelt wird, die eine bei Raumtemperatur gemessene Viskosität von 3 bis 15 Pa.s (30-150 Poise) aufweist.

6. Verfahren nach einem der Ansprüche 3 bis 5, bei dem die Behandlung des Käses bei einem pH im Bereich zwischen 3,5 und 7,5 und vorzugsweise zwischen 4,3 und 5,6 durchgeführt wird.

7. Verfahren nach einem der Ansprüche 3 bis 6, bei dem die Stufen des zur Verfügungstellens einer Alginatlösung und des Trocknens mehrfach wiederholt werden.

8. Verfahren nach einem der Ansprüche 3 bis 7, bei dem der Käse mit einer Alginatlösung behandelt wird, der Hilfssubstanzen wie pH-Regulationsmittel, Farbmittel und Beschichtungshilfssubstanzen zugesetzt sind.

9. Verfahren nach einem der Ansprüche 3 bis 8, bei dem der Käse mit der Käsehaut nach dem Reifeprozeß mit einer herkömmlichen Käsewachsbeschichtung beschichtet wird.

## Revendications

1. Fromage auquel est ancrée une peau de fromage pour la régulation de l'humidité et la protection contre les influences microbiennes, qui peut être obtenue par traitement du fromage, après le saumurage, avec une solution aqueuse d'un alginate hydrosoluble, directement suivi par le séchage de ladite solution d'alginate de manière que la solution d'alginate forme, avec les ions calcium provenant du fromage, une peau de fromage ancrée au fromage, où une émulsion huile dans l'eau contenant 5-15% de matières grasses par rapport à la quantité de solution d'alginate est utilisée comme solution aqueuse.

2. Fromage selon la revendication 1, dans lequel la solution aqueuse est une solution d'alginate de sodium.

3. Procédé pour former une peau de fromage sur du fromage dans lequel le fromage, après le saumurage, est traité avec une solution aqueuse d'un alginate hydrosoluble, laquelle solution aqueuse d'alginate est une émulsion huile dans l'eau contenant 5-15% de matières grasses par rapport à la quantité de solution d'alginate, ledit traitement étant suivi par une étape de séchage.

4. Procédé selon la revendication 3 dans lequel le fromage est traité avec une solution d'alginate de sodium.

5. Procédé selon la revendication 3 ou 4 dans lequel le fromage est traité avec une solution d'alginate de sodium ayant une viscosité, mesurée à la température ambiante, de 3-15 Pa.s (30-150 poises).

6. Procédé selon l'une quelconque des revendications 3 à 5 dans lequel le traitement du fromage est mis en oeuvre à un pH variant entre 3,5 et 7,5, de préférence entre 4,3 et 5,6.

7. Procédé selon l'une quelconque des revendications 3 à 6, dans lequel les étapes de fourniture de la solution d'alginate et de séchage sont répétées un certain nombre de fois.

8. Procédé selon l'une quelconque des revendications 3 à 7, dans lequel le fromage est traité avec une solution d'alginate à laquelle sont ajoutées des substances auxiliaires telles que des régulateurs de pH, des agents colorants et des substances de support d'enrobage.

9. Procédé selon l'une quelconque des revendications 3 à 8, dans lequel, après le processus de maturation, le fromage avec la peau de fromage est enrobé d'un enrobage de cire pour fromage conventionnel.
